(19) Europäisches Patentamt
European Patent Office
Office européen des brevets

(11) **EP 3 687 053 A1**

(12) **EUROPEAN PATENT APPLICATION**
published in accordance with Art. 153(4) EPC

(43) Date of publication:
**29.07.2020 Bulletin 2020/31**

(51) Int Cl.:
**H02M 7/217** *(2006.01)*　　　**H02M 7/219** *(2006.01)*
**H02M 1/42** *(2007.01)*　　　**H02M 1/12** *(2006.01)*

(21) Application number: **18878840.0**

(22) Date of filing: **20.11.2018**

(86) International application number:
**PCT/CN2018/116315**

(87) International publication number:
**WO 2019/096320 (23.05.2019 Gazette 2019/21)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **20.11.2017　CN 201711156406**

(71) Applicant: **Zhejiang Dianniu Electric Co., Ltd.
Zhejiang 310000 (CN)**

(72) Inventors:
• **WANG, Junmai**
　**Zhejiang 310000 (CN)**
• **FENG, Zhihong**
　**Zhejiang 310000 (CN)**

(74) Representative: **Patentanwälte Gierlich &
Pischitzis
Partnerschaft mbB
Gerbermühlstraße 11
60594 Frankfurt am Main (DE)**

(54) **THREE-PHASE ELECTRIC POWER CONTROL SYSTEM, CONVERTER, INVERTER, AND POWER COMPENSATION DEVICE**

(57)　The invention relates to the field of power electronics, and discloses a three-phase electric control system, a converter, an inverter, and a power compensation device, comprising a control circuit. The control circuit is provided with an electronic circuit, and the control circuit forms $i_A(1)$, $i_B(2)$ and $i_C(3)$ whose waveform phases are sequentially different by 120° respectively through the adjustment of the electronic switch. The phase periods of $i_A(1)$, $i_B(2)$ and $i_C(3)$ are all 360°, and $i_A(1)$, $i_B(2)$ and ic(3) are superimposed to form an output current $i_D(4)$. $i_D(4)$ is a flat DC wave with a constant current value. The invention is a strategy to realize the trigger control of a converter, the converter can realize the conversion from a three-phase sine wave current to a completely flat DC, and the DC side voltage is adjustable from 0% to 87% of the peak voltage of the three-phase AC line. The converter can be used in the field of rectification with four-quadrant operation, but not limited to it.

Figure 1

Printed by Jouve, 75001 PARIS (FR)

## Description

## Technical Field

The invention relates to the field of power electronics, and in particular to a three-phase electric control system, a converter, an inverter and a power compensation device.

## Background Art

Most of the current three-phase AC waveforms take sine waves as ideal waves. The waveforms that deviate from sine waves contain harmonic components of various orders. It is hoped that the harmonic content is small in normal AC power grid and AC electric equipment, so circuits or equipment needs to be added to remove harmonic waves.

Most of the current DC waveforms take flat waveforms as ideal waves. The waveforms that deviate from flat waves contain AC harmonic components. It is hoped that the harmonic content is very small in normal DC power supplies, so filter circuits or equipment needs to be added for this purpose.

The width of both the positive half wave and the negative half wave of a sine wave is 180°. However, the three-phase positive sine half-wave current added is not a positive flat DC; the three-phase negative sine half-wave current added is not a negative flat DC. Therefore, ordinary three-phase diode rectifiers and thyristor rectifiers cannot directly obtain flat DC from a three-phase power grid, and some filtering equipment must be added, such as adding filter capacitors or inductors, or converting three-phase current to six-phase or twelve-phase AC.

## Summary of the Invention

Considering that flat DC can not be directly obtained from a three-phase power grid in the prior art, and certain filtering devices must be added, the invention provides a three-phase electrical control system and a converter, an inverter and a power compensation device.

In order to solve the above technical problem, the invention provides the following technical solution:

A three-phase electric control system, comprising a control circuit. The control circuit is provided with an electronic circuit, and the control circuit forms Phase A current $i_A$, Phase B current $i_B$ and Phase C current $i_C$ whose waveform phases are sequentially different by 120° respectively through the adjustment of the electronic switch. The phase periods of Phase A current $i_A$, Phase B current $i_B$ and Phase C current $i_C$ are all 360°, and Phase A current $i_A$, Phase B current $i_B$ and Phase C current ic are superimposed to form an output current $i_D$. $i_D$ is a flat DC wave with a constant current value.

$i_A$, $i_B$ and $i_C$ may be positive or negative current, Phase A current $i_A$ includes $i_{A+}$ and $i_{A-}$, Phase B current $i_B$ includes $i_{B+}$ and $i_{B-}$, and Phase C current $i_C$ includes

$i_{C+}$ and $i_{C-}$; $i_{A+}$, $i_{B+}$, and ic+ are positive current and superimposed to form a positive output current $i_{D+}$; $i_{A-}$, $i_{B-}$, and $i_{C-}$ are negative current and superimposed to form a negative output current $i_{D-}$, $i_{D+}$ and $i_{D-}$ are flat DC waves with a constant current value.

It also includes a first sine wave $I_A$, a second sine wave $I_B$ and a third sine wave $I_C$. The first sine wave $I_A$ is formed by superimposing $i_{A+}$ and $i_{A-}$, the second sine wave $I_B$ is formed by superimposing $i_{B+}$ and $i_{B-}$, the third sine wave $I_C$ is formed by superimposing $i_{C+}$ and $i_{C-}$. The first sine wave $I_A$, the second sine wave $I_B$ and the third sine wave $I_C$ are all sine waves.

Each phase period of Phase A current $i_A$, Phase B current $i_B$, and Phase C current ic includes four waveforms;

The four waveforms in one period of $i_{A+}$ generated by the control circuit are as follows:

When -30° < ωt < = 30° $i_{A+}(\omega t) = I_D * (1 + \sin(\omega t - 60°))$;

When 30° < ωt < = 150° $i_{A+}(\omega t) = I_D * (\sin(\omega t))$;

When 150° < ωt < = 210° $i_{A+}(\omega t) = I_D * (1 - \sin(\omega t - 120°))$;

When 210° < ωt < = 330° $i_{A+}(\omega t) = 0$;

Where $I_D$ is the amplitude of the current waveform, ω is the angular frequency, and t is the time;

The waveforms of $i_{B+}$, $i_{C+}$, $i_{A-}$, $i_{B-}$, and $i_{C-}$ generated by the control circuit are as follows:

$$i_{B+}(\omega t) = i_{A+}(\omega t - 120°);$$

$$i_{C+}(\omega t) = i_{A+}(\omega t + 120°);$$

$$i_{A-}(\omega t) = -i_{A+}(\omega t + 180°);$$

$$i_{B-}(\omega t) = -i_{B+}(\omega t + 180°);$$

$$i_{C-}(\omega t) = -i_{C+}(\omega t + 180°);$$

Where $i_{A-}$ and $i_{A-}$ are superimposed to form $i_A$, $i_{B+}$ and $i_{B-}$ are superimposed to form $i_B$, $i_{C+}$ and $i_{C-}$ are superimposed to form $i_C$, and $i_A$, $i_B$ and $i_C$ form three sine waves that differ by 120°.

The converter, which also includes the above three-phase electric control system. The angular frequency of Phase A current $i_A$, Phase B current $i_B$, and Phase C current ic is controlled by the three-phase electric control system to be equal to the angular frequency of the three-phase AC voltage. The phase of Phase A current $i_A$, Phase B current $i_B$ and Phase C current ic is controlled by the three-phase electric control system to differ from the phase of the three-phase voltage by a fixed angle φ. When 90°<φ<=270°, the converter becomes an inverter and converts DC to three-phase AC. By controlling the size of the angle φ through the three-phase electric control system, the proportional relationship between the DC voltage and the AC voltage of the converter can be changed, and thus the DC voltage or the AC voltage can be adjusted.

The reactive power compensation device, which also includes the above three-phase electric control system. The angular frequency of Phase A current $i_A$, Phase B current $i_B$, and Phase C current $i_C$ is controlled by the three-phase electric control system to be equal to the angular frequency of the three-phase AC voltage. The phase of Phase A current $i_A$, Phase B current $i_B$ and Phase C current $i_C$ is controlled by the three-phase electric control system to differ from the phase of the three-phase voltage by a fixed angle φ. When φ ≈ -90° or φ ≈ + 90°, the DC voltage of the converter is close to zero, and the power factor of the converter is also close to zero. The converter can provide positive or negative reactive power, respectively, and becomes a continuously adjustable power factor compensation device.

The harmonic compensation device, which also includes the above three-phase electric control system. The angular frequency of Phase A current $i_A$, Phase B current $i_B$, and Phase C current $i_C$ is controlled by the three-phase electric control system to be an integer multiple of the angular frequency of the three-phase AC voltage. The phase of Phase A current $i_A$, Phase B current $i_B$ and Phase C current $i_C$ is controlled by the three-phase electric control system to differ from the phase of the three-phase voltage by a fixed angle φ. At this time, Phase A current $i_A$, Phase B current $i_B$ and Phase C current $i_C$ of the three-phase current are harmonic current that is an integer multiple of the frequency of the three-phase AC power grid. Adjust the angle φ and the magnitude of the current to make Phase A current $i_A$, Phase B current $i_B$ and Phase C current $i_C$ exactly equal to and in the opposite direction of the harmonic current generated by the electrical equipment in the power grid, which compensates for a harmonic current in the power grid. Repeat this process to make the three-phase electric control system generate multiple harmonic currents of different integer multiples at the same time and to make Phase A current $i_A$, Phase B current $i_B$ and Phase C current $i_C$ the sum of all harmonic currents, which can compensate for all harmonic currents in the power grid.

As the invention adopts the above technical solution, it has significant technical effects: The invention is a strategy to realize the trigger control of a converter, the converter can realize the conversion from a three-phase sine wave current to a completely flat DC, and the DC side voltage is adjustable from 0% to 87% of the peak voltage of the three-phase AC line. The converter can be used in the field of rectification with four-quadrant operation, but not limited to it. It is a strategy to realize the trigger control of a converter, the converter can realize the conversion from DC to three-phase sinusoidal current, and the reactive and harmonic components on the AC side are controllable. The converter can be used in the field of AC frequency conversion, but not limited to it. It is a strategy to realize the trigger control of a converter, the converter can generate three-phase sinusoidal reactive and higher harmonic currents, reactive power and each higher harmonic wave have controllable phases, amplitudes, positive-sequence and negative-sequence components, and the converter can be used in the field of reactive, negative-sequence and harmonic compensation, but not limited to it.

**Description of the Drawings**

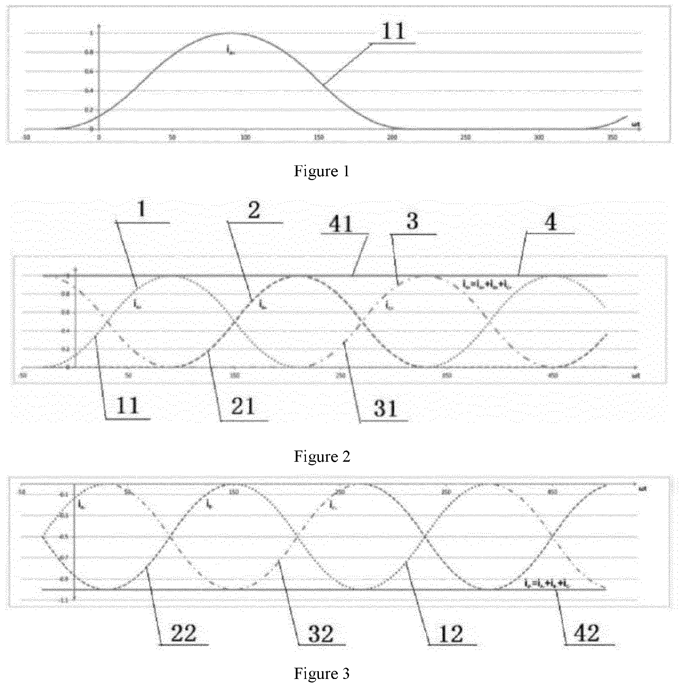

Figure 1 is the waveform diagram of $i_{A+}$ of the invention.

Figure 2 is the waveform diagram of $i_{A+}$, $i_{B+}$ and ic+ and the waveform diagram of the output wave $i_{D+}$ obtained by superposing the three waveforms, $i_{D+}$ is a flat DC waveform.

Figure 3 is the waveform diagram of $i_{A-}$, $i_{B-}$ and $i_{C-}$ and the waveform diagram of the output wave $i_{D-}$ obtained by superposing the three waveforms, $i_{D-}$ is a flat DC waveform.

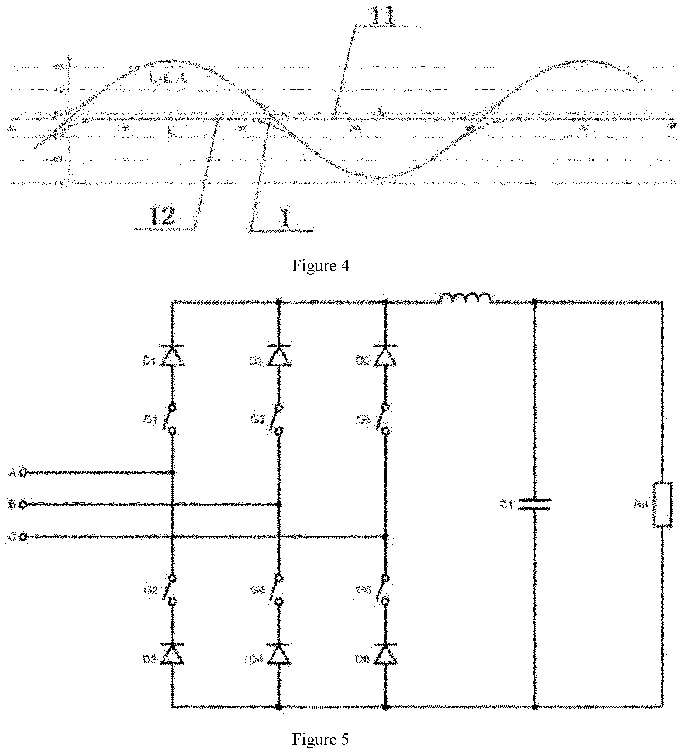

Figure 4 is the waveform diagram of $i_A$ obtained by superimposing $i_{A+}$ and $i_{A-}$.

Figure 5 is the schematic diagram of the main circuit topology of the three-phase AC converter.

The names of the parts indicated by numbers in the drawings are as follows: 1-$i_A$, 2-$i_B$, 3-$i_C$, 4-$i_D$, 11-$i_{A+}$, 12-$i_{A-}$, 21-$i_{B+}$, 22-$i_{B-}$, 31-$i_{C+}$, 32-$i_{C-}$, 41-$i_{D+}$, 42-$i_{D-}$.

**Detailed Description of the Preferred Embodiments**

The invention is described in further detail below with reference to the drawings and embodiments.

Embodiment 1

As shown in the figure, the three-phase electric control system includes a control circuit, and the control circuit is provided with an electronic switch. The control circuit generates Phase A current $i_A$, Phase B current $i_B$ and Phase C current $i_C$ whose waveform phases are sequentially different by 120° respectively through the adjustment of the electronic switch. The following Phase A current $i_A$ is simplified to $i_A$, Phase B current $i_B$ is simplified to $i_B$, and Phase C current ic is simplified to ic. The phase periods of $i_A1$, $i_B2$ and ic3 are 360°, $i_A1$ $i_B2$ and ic3 are superimposed to form an output current $i_D4$, and $i_D4$ is a flat DC wave with a constant current value.

$i_A1$, $i_B2$ and ic3 all include positive and negative currents, $i_A1$ includes $i_{A+}11$ and $i_{A-}12$, $i_B2$ includes $i_{B+}21$ and $i_B$-22, $i_C3$ includes $i_{C+}31$ and $i_{C-}32$; $i_{A+}11$ , $i_B+21$ and $i_C+31$ are positive currents and superimposed to form a positive output current $i_{D+}41$; $i_{A-}12$, $i_B-22$ and $i_{C-}32$ are negative currents and superimposed to form a negative output current $i_{D-}42$, $i_{D+}41$ and $i_{D-}42$ are flat DC waves with a constant current value.

$i_A1 = i_{A+}11 + i_{A-}12$, $i_B2 = i_{B+}21 + i_B$-22, and $i_C3 = i_C+31 + i_{C-}32$ are also included. $i_A1$, $i_B2$, and $i_C3$ are all sine waves.

Each phase period of $i_A1$, $i_B2$ and $i_C3$ includes four waveforms;
The four waveforms in one cycle of $i_{A+}11$ generated by the control circuit are as follows:

When -30° < ωt <= 30° $i_{A+}$ (ωt) = $I_D$* (1 + sin (ωt-60°));
When 30° < ωt <= 150° $i_{A+}$ (ωt) = $I_D$* (sin (ωt));
When 150° < ωt <= 210° $i_{A+}$ (ωt) = $I_D$* (1-sin (ωt-120°));
When 210° < ωt <= 330° $i_{A+}$ (ωt) = 0;
Where $I_D$ is the amplitude of the current waveform, ω is the angular frequency, and t is the time;

The waveforms of $i_{B+}21$, $i_C+31$, $i_{A-}12$, $i_B$-22, and $i_{C-}32$ generated by the control circuit are as follows:

$$i_{B+} (\omega t) = i_{A+} (\omega t - 120°);$$

$$i_{C+} (\omega t) = i_{A+} (\omega t + 120°);$$

$$i_{A-} (\omega t) = -i_{A+} (\omega t + 180°);$$

$$i_{B-} (\omega t) = -i_{B+} (\omega t + 180°);$$

$$i_{C-} (\omega t) = -i_{C+} (\omega t + 180°);$$

Where $i_{A+}11$ and $i_{A-}12$ are superimposed to form $i_A1$, $i_B+21$ and $i_B$-22 are superimposed to form $i_B2$, $i_C+31$ and $i_{C-}32$ are superimposed to form $i_C3$, and $i_A1$, $i_B2$, and $i_C3$ form three sine waves that differ by 120°.

The converter, which also includes the above three-phase electric control system. The angular frequency of the three-phase currents $i_A1$, $i_B2$ and ic3 is controlled by the three-phase electric control system to be equal to the angular frequency of the three-phase AC voltage. The phase of the three-phase currents $i_A1$, $i_B2$ and $i_C3$ is controlled by the three-phase electric control system to differ from the phase of the three-phase voltage by a fixed angle φ. When 90°<φ<= 270°, the converter becomes an inverter and converts DC to three-phase AC. By changing the size of the angle φ through the three-phase electric control system, the purpose of changing the output DC voltage of the converter is achieved. Changing the angle φ will change the output DC voltage, and will also change the phase difference between the three-phase current and the three-phase voltage, so that reactive power can be output to the three-phase AC power grid, which can be used for power grid reactive power compensation. When no reactive power compensation is needed, 2 three-phase currents can be generated simultaneously through the three-phase electric control system and the total current is the superposition of the 2 currents, that is, $i_A = i_A1 + i_A2$, $i_B = i_B1 + i_B2$, $i_C = i_C1 + i_C2$, and the phase angles of the two three-phase currents and the phase angles of the three-phase voltages differ by +φ and -φ, respectively. In this way, the positive reactive power (or negative reactive power) generated by $i_A1$, $i_B1$ and $i_C1$ is exactly offset by the negative reactive power (or positive reactive power) generated by $i_A2$, $i_B2$, and $i_C2$. At this time, the converter purely provides AC-DC energy conversion, and will not produce reactive power, that is, the converter with a power factor of 1.0.

The power compensation device includes a reactive power compensation device and a harmonic compensation device.

The reactive power compensation device, which also includes the above three-phase electric control system. The angular frequency of the three-phase currents $i_A1$, $i_B2$ and $i_C3$ is controlled by the three-phase electric control system to be equal to the angular frequency of the three-phase AC voltage. The phase of the three-phase currents $i_A1$, $i_B2$ and ic3 is controlled by the three-phase electric control system to differ from the phase of the three-phase voltage by a fixed angle φ. When φ ≈ -90° or φ ≈ + 90°, the output DC voltage of the converter is close to zero, and the power factor of the converter is also close to zero. The converter can provide positive or negative reactive power, respectively, and becomes a continuously adjustable power factor compensation device.

The harmonic compensation device also includes the above three-phase electric control system. The angular frequency of the three-phase currents $i_A1$, $i_B2$ and $i_C3$ is controlled by the three-phase electric control system to be an integer multiple of the angular frequency of the three-phase AC voltage. The phase of the three-phase currents $i_A1$, $i_B2$ and ic3 is controlled by the three-phase electric control system to differ from the phase of the three-phase voltage by a fixed angle φ. At this time, the three-phase currents $i_A1$, $i_B2$ and ic3 of the three-phase current are harmonic current that is an integer multiple of the frequency of the three-phase AC power grid. Adjust the angle φ and the magnitude of the current to make the three-phase currents $i_A1$, $i_B2$ and $i_C3$ exactly equal to and in the opposite direction of the harmonic current generated by the electrical equipment in the power grid, which compensates for a harmonic current in the power grid. Repeat this process to make the three-phase electric control system generate multiple harmonic currents of different integer multiples at the same time and to make $i_A1$, $i_B2$ and $i_C3$ the sum of all harmonic currents, which can compensate for all harmonic currents in the power grid, thus becoming a power grid harmonic compensation device. In short, the above description is only a preferred embodiment of the invention, and any equivalent changes and modifications made in accordance with the scope of the patent application of the invention shall fall within the scope of the invention patent.

**Claims**

1.  A three-phase electric control system, **characterized in that** it comprises a control circuit. The control circuit is provided with an electronic circuit, and the control circuit forms Phase A current $i_A(1)$, Phase B current $i_B(2)$ and Phase C current ic(3) whose waveform phases are sequentially different by 120° respectively through the adjustment of the electronic switch. The phase periods of Phase A current $i_A(1)$, Phase B current $i_B(2)$ and Phase C current ic(3) are all 360°, and Phase A current $i_A(2)$, Phase B current $i_B(2)$ and Phase C current $i_C(2)$ are superimposed to form an output current $i_D(4)$. $i_D(4)$ is a flat DC wave with a constant current value.

2.  The three-phase electric control system according to Claim 1, **characterized in that**: Phase A current $i_A(1)$, Phase B current $i_B(2)$ and Phase C current $i_C(3)$ may be positive or negative current, Phase A current $i_A(1)$ includes $i_{A+}(11)$ and $i_{A-}(12)$, Phase B current $i_B(2)$ includes $i_B(21)_+$ and $i_{B-}(22)$, and Phase C current $i_C(3)$ includes $i_{C+}(31)$ and $i_{C-}(32)$; $i_{A+}(11)$, $i_{B+}(21)$, and $i_{C+}(31)$ are superimposed to form a positive output current $i_{D+}(41)$; $i_{A-}(12)$, $i_{B-}(22)$, and $i_{C-}(32)$ are superimposed to form a negative output current $i_{D-}(42)$, $i_{D+}(41)$ and $i_{D-}(42)$ are flat DC waves with a constant current value.

3.  The three-phase electric control system according to Claim 1, **characterized in that**: It also includes a first sine wave $I_A(101)$, a second sine wave $I_B(201)$ and a third sine wave $I_C(301)$. The first sine wave $I_A(101)$ is formed by superimposing $i_{A}+(11)$ and $i_{A-}(12)$, the second sine wave $I_B(201)$ is formed by superimposing $i_{B+}(21)$ and $i_{B-}(22)$, the third sine wave $I_C(301)$ is formed by superimposing ic+(31) and $i_{C-}(32)$. The first sine wave $I_A(101)$, the second sine wave $I_B(201)$ and the third sine wave $I_C(301)$ are all sine waves.

4.  The three-phase electric control system according to Claims 1-3, **characterized in that**: Each phase period of Phase A current $i_A(1)$, Phase B current $i_B(2)$, and Phase C current ic(3) includes four waveforms;

The four waveforms in one period of $i_{A+}(11)$ generated by the control circuit are as follows:

When $-30° < \omega t < = 30°$ $i_A + (\omega t) = I_D * (1 + \sin(\omega t-60°))$;
When $30° < \omega t < = 150°$ $i_{A+}(\omega t) = I_D * (\sin(\omega t))$;
When $150° < \omega t < = 210°$ $i_{A+}(\omega t) = I_D * (1-\sin(\omega t-120°))$;
When $210° < \omega t < = 330°$ $i_{A+}(\omega t) = 0$;
Where $I_D$ is the amplitude of the current waveform, $\omega$ is the angular frequency, and t is the time;

The waveforms of $i_{B+}(21)$, $i_{C+}(31)$, $i_{A-}(12)$, $i_{B-}(22)$, and $i_{C-}(32)$ generated by the control circuit are as follows:

$$i_{B+}(\omega t) = i_{A+}(\omega t-120°);$$

$$i_{C+}(\omega t) = i_{A+}(\omega t+120°);$$

$$i_{A-}(\omega t) = -i_{A+}(\omega t+180°);$$

$$i_{B-}(\omega t) = -i_{B+}(\omega t+180°);$$

$$i_{C-}(\omega t) = -i_{C+}(\omega t+180°);$$

Where $i_{A-}(11)$ and $i_{A-}(12)$ are superimposed to form $i_A(1)$, $i_{B+}(21)$ and $i_{B-}(22)$ are superimposed to form $i_B(2)$, ic+(31) and $i_{C-}(32)$ are superimposed to form ic(3), and $i_A(1)$, $i_B(2)$ and $i_C(3)$ form three sine waves that differ by 120°.

5.  The converter, **characterized in that** it also includes the above three-phase electric control system according to Claims 1-4. The angular frequency of Phase A current $i_A(1)$, Phase B current $i_B(2)$, and Phase C current $i_C(3)$ is controlled by the three-phase electric control system to be equal to the angular frequency of the three-phase AC voltage. The phase of Phase A current $i_A(1)$, Phase B current $i_B(2)$ and Phase C current $i_C(3)$ is controlled by the three-phase electric control system to differ from the phase of the three-phase voltage by a fixed angle $\varphi$. When $-90°<\varphi<=90°$, the converter operates in the rectifier state and converts the three-phase AC to DC. By controlling the size of the angle $\varphi$ through the three-phase electric control system, the output DC voltage of the converter can be adjusted.

6. The inverter, **characterized in that** it also includes the three-phase electric control system according to Claims 1-4. The angular frequency of Phase A current $i_A(1)$, Phase B current $i_B(2)$, and Phase C current $i_C(3)$ is controlled by the three-phase electric control system to be equal to the angular frequency of the three-phase AC voltage. The phase of Phase A current $i_A(1)$, Phase B current $i_B(2)$ and Phase C current $i_C(3)$ is controlled by the three-phase electric control system to differ from the phase of the three-phase voltage by a fixed angle $\varphi$. When $90° < \varphi <= 270°$, the converter becomes an inverter and converts DC to three-phase AC. By controlling the size of the angle $\varphi$ through the three-phase electric control system, the output AC voltage of the converter can be adjusted.

7. The reactive power compensation device, **characterized in that** it also includes the three-phase electric control system according to Claims 1-4. The angular frequency of Phase A current $i_A(1)$, Phase B current $i_B(2)$, and Phase C current $i_C(3)$ is controlled by the three-phase electric control system to be equal to the angular frequency of the three-phase AC voltage. The phase of Phase A current $i_A(1)$, Phase B current $i_B(2)$ and Phase C current $i_C(3)$ is controlled by the three-phase electric control system to differ from the phase of the three-phase voltage by a fixed angle $\varphi$. When $\varphi \approx -90°$ or $\varphi \approx +90°$, the DC voltage of the converter is close to zero, and the power factor of the converter is also close to zero. The converter can provide positive or negative reactive power, respectively, and becomes a continuously adjustable power factor compensation device.

8. The harmonic compensation device, **characterized in that** it also includes the three-phase electric control system according to Claims 1-4. The angular frequency of Phase A current $i_A(1)$, Phase B current $i_B(2)$, and Phase C current $i_C(3)$ is controlled by the three-phase electric control system to be an integer multiple of the angular frequency of the three-phase AC voltage. The phase of Phase A current $i_A(1)$, Phase B current $i_B(2)$ and Phase C current $i_C(3)$ is controlled by the three-phase electric control system to differ from the phase of the three-phase voltage by a fixed angle $\varphi$. At this time, Phase A current $i_A(1)$, Phase B current $i_B(2)$ and Phase C current $i_C(3)$ of the three-phase current are harmonic current that is an integer multiple of the frequency of the three-phase AC power grid. Adjust the angle $\varphi$ and the magnitude of the current to make Phase A current $i_A(1)$, Phase B current $i_B(2)$ and Phase C current $i_C(3)$ exactly equal to and in the opposite direction of the harmonic current generated by the electrical equipment in the power grid, which compensates for a harmonic current in the power grid. Repeat this process to make the three-phase electric control system generate multiple harmonic currents of different integer multiples at the same time and to make Phase A current $i_A(1)$, Phase B current $i_B(2)$ and Phase C current $i_C(3)$ the sum of all harmonic currents, which can compensate for all harmonic currents in the power grid.

Figure 1

Figure 2

Figure 3

Figure 4

Figure 5

## INTERNATIONAL SEARCH REPORT

| International application No. |
| --- |
| **PCT/CN2018/116315** |

**A.    CLASSIFICATION OF SUBJECT MATTER**

H02M 7/217(2006.01)i;   H02M 7/219(2006.01)i;   H02M 1/42(2007.01)i;   H02M 1/12(2006.01)i

According to International Patent Classification (IPC) or to both national classification and IPC

**B.    FIELDS SEARCHED**

Minimum documentation searched (classification system followed by classification symbols)

H02M

Documentation searched other than minimum documentation to the extent that such documents are included in the fields searched

Electronic data base consulted during the international search (name of data base and, where practicable, search terms used)

CNABS; CNTXT, CNKI; IEEE; DWPI; SIPOABS: 三相, 控制, 电流, 逆变, 直流, 正弦, 无功补偿, 谐波补偿, sin(ωt-60°), cos(ωt-2π/3), sin(ωt-2π/3), cos(ωt-120°), three phase, control, current, invert, direct current, sine, reactive, harmonic, compensat+,

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 108011534 A (ZHEJIANG DIANNIU ELECTRICAL CO., LTD.) 08 May 2018 (2018-05-08) <br> claims 1-8 | 1-8 |
| X | CN 106655263 A (XI"AN POLYTECHNIC UNIVERSITY) 10 May 2017 (2017-05-10) <br> description, paragraphs 0060-0066, and figures 1-3 | 1-3, 5-8 |
| A | CN 105914793 A (GUODIAN NANJING AUTOMATION CO., LTD.) 31 August 2016 (2016-08-31) <br> entire document | 1-8 |
| A | CN 103595312 A (JIANGSU UNIVERSITY OF SCIENCE AND TECHNOLOGY) 19 February 2014 (2014-02-19) <br> entire document | 1-8 |
| A | US 2007268728 A1 (UNIV MINNESOTA) 22 November 2007 (2007-11-22) <br> entire document | 1-8 |

☐ Further documents are listed in the continuation of Box C.       ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **11 January 2019** | **20 February 2019** |

| Name and mailing address of the ISA/CN | Authorized officer |
| --- | --- |
| **State Intellectual Property Office of the P. R. China** <br> **No. 6, Xitucheng Road, Jimenqiao Haidian District, Beijing 100088** <br> **China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2018/116315**

| Patent document cited in search report | | | Publication date (day/month/year) | Patent family member(s) | | | Publication date (day/month/year) |
|---|---|---|---|---|---|---|---|
| CN | 108011534 | A | 08 May 2018 | None | | | |
| CN | 106655263 | A | 10 May 2017 | None | | | |
| CN | 105914793 | A | 31 August 2016 | CN | 105914793 | B | 23 March 2018 |
| CN | 103595312 | A | 19 February 2014 | None | | | |
| US | 2007268728 | A1 | 22 November 2007 | WO | 2007139800 | A3 | 31 January 2008 |
| | | | | US | 7869236 | B2 | 11 January 2011 |
| | | | | WO | 2007139800 | A2 | 06 December 2007 |

Form PCT/ISA/210 (patent family annex) (January 2015)